# EUROPÄISCHE PATENTSCHRIFT

(11) **EP 0 539 760 B1**
(45) Veröffentlichungstag und Bekanntmachung des Hinweises auf die Patenterteilung: **11.09.1996**
(21) Anmeldenummer: 92116929.8
(22) Anmeldetag: 02.10.1992
(51) Int. Cl.: H01Q 21/24, H01Q 21/00

(54) **Sende/Empfangs-Modul für eine elektronisch phasengesteuerte Antenne**
Transmit/receive module for an electronically phased array antenna
Modul émetteur-récepteur pour une antenne à commande électronique de phase

(30) Priorität: 29.10.1991 DE 9113444 U
(43) Veröffentlichungstag der Anmeldung: 05.05.1993
(73) Patentinhaber: SIEMENS AKTIENGESELLSCHAFT, 80333 München (DE)
(72) Erfinder: Roth, Dieter, Dipl.-Phys., W-8000 München 70 (DE)

(56) Entgegenhaltungen:
- EP-A- 0 445 694
- IGARSS 89 12TH CANADIAN SYMPOSIUM ON REMOTE SENSING Bd. 4 , Juli 1989 , VANCOUVER,CANADA Seiten 2269 - 2272 ZAHN ET AL. 'A PHASED ARRAY BREAD BOARD FOR FUTURE REMOTE SENSING APPLICATIONS'

## Beschreibung

Die Erfindung bezieht sich auf einen Sende/Empfangs-Modul gemäß dem Oberbegriff des Anspruchs 1.

Ein aktiver Sende/Empfangs-Modul in monolithisch integrierter Mikrowellenschaltungsausführung (MMIC) für ein in vertikaler und ein in horizontaler Polarisation arbeitendes Strahlerelement einer elektronisch phasengesteuerten Antenne ist aus dem Aufsatz von M.Priolo et al: "Multifunction Transmit and Receive Modules for EW Arrays" in der Zeitschrift "Microwave Journal", Februar 1991, Seiten 83 bis 92, insbesondere Seiten 86 und 87, bekannt. Der in dieser Literaturstelle beschriebene Modul soll im Sendefall im Rahmen einer elektronischen Gegenmaßnahme in einem aktiven Störer und im Empfangsfall im Rahmen einer Frequenz- und Signalidentifizierung bei der elektronischen Aufklärung dienen. Vertikale und horizontale Polarisation ist sowohl im Empfangs- als auch im Sendefall möglich. Die Polarisationsumschaltung kombiniert die gesamte Sendeenergie entweder an den Vertikal- oder Horizontalpolarisationsanschlüssen, was durch Erteilung einer 90^{o}-Phasendifferenz zwischen den beiden Leistungsanschlüssen aufgrund der Verwendung von Quadraturhybriden und eines Polarisationsschalters erreicht wird. Im Empfangsfall werden die Empfangsverstärker in den Empfangsweg entsprechend der Polarisationswahl geschaltet, wodurch eine Rauschzahlverschlechterung vermieden wird. Die Sende-Empfangsumschaltung wird durch Shuntschalter in ein Sendeverstärker-Vierwegleistungskombiniernetzwerk bewerkstelligt. Im Sendefall arbeiten die Schalter in einem Zustand mit niedrigem Verlust, wogegen sie im Empfangsfall in einen stark reflektierenden Zustand umgeschaltet werden, was eine Leitung des Signals in den Empfangskanal bewirkt. Von Nachteil bei dieser bekannten Schaltung sind die verhältnismäßig aufwendigen Sende-Empfangsschalter und die Verwendung von 3 dB-Hybriden.

Aktive Sende-/Empfangsmodule in integrierter Mikrowellenschaltungsausführung für eine elektronisch phasengesteuerte Antenne sind auch aus den Aufsätzen von M.E. Davis et al: "L-Band T/R Module for Airborne Phased Array" in der Zeitschrift "Microwave Journal", Feb. 77, Seiten 54 bis 60 und von P.Bradsell: "Phased arrays in radar", in der Zeitschrift "Electronics & Communication Engineering Journal", April 1990, Seiten 45 bis 50 bekannt. Bei diesen Modulen wird allerdings nur in einer einzigen Polarisation gearbeitet, so daß keine Polarisationsumschaltung erforderlich ist. Jedoch befindet sich auch hier im Sendeweg ein Leistungsverstärker zwischen dem Sendekontakt des Sende-Empfangsumschalters und einem Zirkulatoranschluß und im Empfangsweg zwischen einem anderen Zirkulatoranschluß und dem Empfangskontakt des Sende-Empfangsumschalters ein rauscharmer Verstärker.

Wollte man einen solchen Modul für die Versorgung sowohl eines Strahlerelementes für horizontale Polarisation als auch eines Strahlerelements für vertikale Polarisation ausgestalten, so wäre die sich anbietende Lösung, einen Polarisationsumschalter an den Zirkulator anzuschließen und mit seinen Umschaltkontakten unmittelbar an die Strahlerelementanschlüsse für die jeweiligen Polarisationen zu legen. Durch den Verlustbeitrag des Polarisationsumschalters würde sich ein solcher Sende/Empfangs-Modul und damit auch das gesamte Antennensystem um zumindest 2 dB verschlechtern. Verglichen mit einem Sende/Empfangs-Modul ohne Leistungs-Polarisationsumschalter ist die Sendeausgangsleistung um mindestens 1 dB kleiner und die Empfangsrauschzahl um mindestens 1 dB höher. Andererseits würde das Verhältnis zwischen Empfangssignal und Rauschen des Antennensystems um etwa 2 dB mit der gleichen Ausgangsleistung des abschließenden Empfängers verbessert werden, wenn der Polarisationsumschalter vermieden werden würde. Da 2 dB etwa einem Faktor von 1,6 entsprechen, ergibt ein 2 Watt-Leistungsverstärker in einem Sende/Empfangs-Modul ohne Leistungs-Polarisationsumschalter das gleiche Verhältnis zwischen Empfangssignal und Rauschen wie ein 3,2 Watt-Leistungsempfänger in einem Sende/Empfangs-Modul mit Leistungs-Polarisationsumschalter. Nimmt man einen um 40% leistungsgesteigerten Leistungsverstärker an und vernachlässigt man den Leistungsverlust im Antennen-Leistungsverteilungssystem, dann können etwa 38^{o} der Versorgungsleistung oder ungefähr 3 Watt pro Sende/Empfangs-Modul während der Sendephase im Antennensystem gespart werden, wenn kein Polarisationsumschalter zwischen dem Leistungsverstärker und dem Strahlerelement vorhanden ist.

Aufgabe der Erfindung ist es, für eine elektronisch phasengesteuerte Antenne einen aktiven, ohne 3 dB-Koppler und umständliche Sende-Empfangsschalter auskommenden Sende/Empfangs-Modul zu schaffen, der sowohl ein Strahlerelement für vertikale Polarisation als auch ein Strahlerelement für horizontale Polarisation beaufschlagt und der hinsichtlich des Signal/Rausch-Verhältnisses ähnlich günstige Eigenschaften zeigt wie ein Modul ohne Polarisationsumschaltung, wobei auch an die Polarisationsentkopplung hohe Anforderungen gestellt werden können.

Diese Aufgabe wird bei einem gattungsgemäßen Sende/Empfangs-Modul durch die im kennzeichnenden Teil des Anspruchs 1 angegebenen Merkmale gelöst.

Beim Sende/Empfangs-Modul nach der Erfindung ergeben sich enorme Vorteile einerseits beim Signal/Rausch-Verhältnis für eine gegebene Versorgungsleistung oder auf der anderen Seite Einsparungen bei der Primärleistung und beim Gesamtsystemaufwand bei gegebenen Systemausführungserfordernissen.

Zweckmäßige Weiterbildungen der Erfindung sind in den Unteransprüchen angegeben.

Die Erfindung wird im folgenden anhand zweier Figuren erläutert. Es zeigen
- Fig. 1: in Blockschaltbildform die Schaltung eines Sende/Empfangs-Moduls nach der Erfindung,
- Fig. 2: Untereinheiten dieses Sende/Empfangs-Moduls.

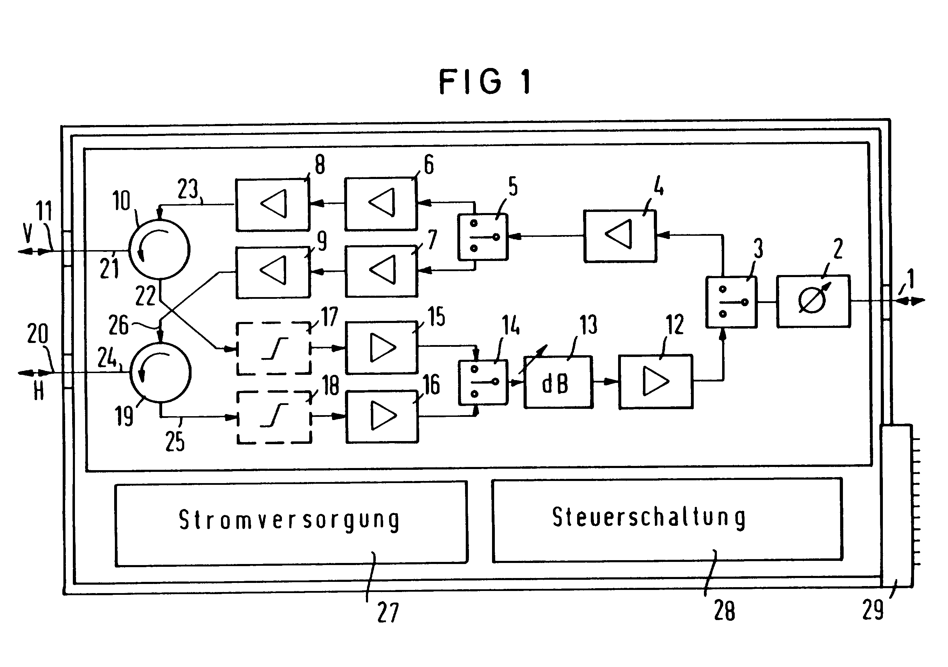

In Fig.1 ist das Schema eines Sende/Empfangs-Moduls nach der Erfindung schematisch in Blockschaltbildform dargestellt. Das Sendesignal gelangt über einen Antennensystem-Speiseanschluß 1 über einen elektronisch einstellbaren Phasenschieber 2 an den Umschaltarm eines Sende-Empfangsschalters 3, von dessen Sendekontakt über einen rauscharmen Verstärker 4 eine Weiterleitung an den Umschaltarm eines Polarisationsumschalters 5 erfolgt. An die Umschaltkontakte des Polarisationsumschalters 5 ist in zwei Polarisationssendekanälen jeweils über einen linearen Treiberverstärker 6 bzw. 7 ein Hochleistungsverstärker 8 bzw. 9 angeschlossen. Die Ausgänge der Hochleistungsverstärker 8 und 9 sind mit den Eingängen 23 bzw. 26 zweier Zirkulatoren 10 bzw. 19 verbunden. Je nach Stellung des Polarisationsumschalters 5 gelangt nun das auszusendende Signal über den Anschluß 21 des Zirkulators 10 bzw. den Anschluß 24 des Zirkulators 19 an einen Strahlerelementanschluß 11 für ein vertikal polarisiertes Strahlerelement oder an einen Strahlerelementanschluß 20 für ein horizontal polarisiertes Strahlerelement. Der Empfangsweg vom vertikal polarisierten Strahlerelement bzw. vom horizontal polarisierten Strahlerelement verläuft über den Strahlerelementanschluß 11 bzw. 20 an den Anschluß 21 des Zirkulators 10 bzw. den Anschluß 24 des Zirkulators 19. Vom Anschluß 22 des Zirkulators 10 bzw. vom Anschluß 25 des Zirkulators 19 wird das empfangene Signal über einen Begrenzer 17 bzw. 18 in zwei Polarisationsempfangskanälen an einen rauscharmen Verstärker 15 bzw. 16 geführt. Die Ausgänge der beiden rauscharmen Verstärker 15 und 16 sind mit den Umschaltkontakten eines Polarisationsumschalters 14 verbunden. Der Umschaltarm des Polarisationsumschalters 14 ist über ein passives Dämpfungsglied 13 (an dessen Stelle läßt sich auch ein Verstärker mit einstellbarer Verstärkung verwenden) und einen rauscharmen Verstärker 12 mit dem Empfangskontakt des Sende-Empfangsschalters 3 verbunden. Vom Umschaltarm des Sende-Empfangsschalters 3 gelangt das jeweils empfangene Signal über den elektronisch einstellbaren Phasenschieber 2 an den Antennensystem-Speiseanschluß 1. In der unteren Stellung bewirken die beiden Polarisationsumschalter 5 und 14 einen Betrieb in horizontaler Polarisation und in der oberen Stellung in vertikaler Polarisation. Im dargestellten Modul sind noch eine Stromversorgungsschaltung 27 und eine Steuerschaltung 28 sowie eine Anschlußeinheit 29 mit Kontaktstiften vorgesehen. Die beiden Polarisationsumschalter 5 und 14 sind im Kleinsignalteil des Sende/Empfangs-Moduls eingefügt, wo die Durchgangsverluste von geringerer Bedeutung sind. In Richtung auf die Antennenseite des Sende/Empfangs-Moduls werden zwei getrennte Polarisationskanäle sowohl für den Sende- als auch für den Empfangsbetrieb durch doppelt vorgesehene Hochleistungsverstärker 8 und 9, doppelt vorgesehene rauscharme Verstärker 15 und 16 und doppelt vorgesehene Zirkulatoren 10 und 19 gebildet. Es ist somit nur die Durchgangsdämpfung eines einzigen Zirkulators zwischen Hochleistungsverstärker und Strahlerelement vorhanden. Es wird lediglich ein Polarisationskanal zur gleichen Zeit aktiviert. Durch Umschaltung der Stromversorgung zwischen den beiden Polarisationskanälen muß lediglich die Gleichstromleistung zum Betreiben eines Polarisationskanals dem Sende/Empfangs-Modul zugeführt werden.

Ein zusätzlicher wesentlicher Vorteil des Moduls nach der Erfindung ist die hohe Isolation zwischen den beiden Antennenpolarisationen, die nicht mehr durch die Entkopplungsqualitäten eines einzigen vorhandenen Leistungs Polarisationsumschalters begrenzt ist.

Die Zunahme an Größe und Schaltungsmenge beim Sende/Empfangs-Modul nach der Erfindung ist verhältnismäßig gering, da die zusätzlichen Komponenten sehr klein sind und wenig Schaltungsmenge erfordern. Für den Gesamtsystemaufwand muß die Schaltungsmengenzunahme für die gemäß der Erfindung ausgebildeten Sende/Empfangs-Module im Vergleich mit den Einsparungen an Primärleistung gesehen werden, wenn ein Sende/Empfangs-Modul, in dem die Polarisationsumschaltung unmittelbar an den Strahlerelementanschlüssen liegt, mit gleich großem Empfangssignal/Rausch-Verhältnis ausgeführt wird.

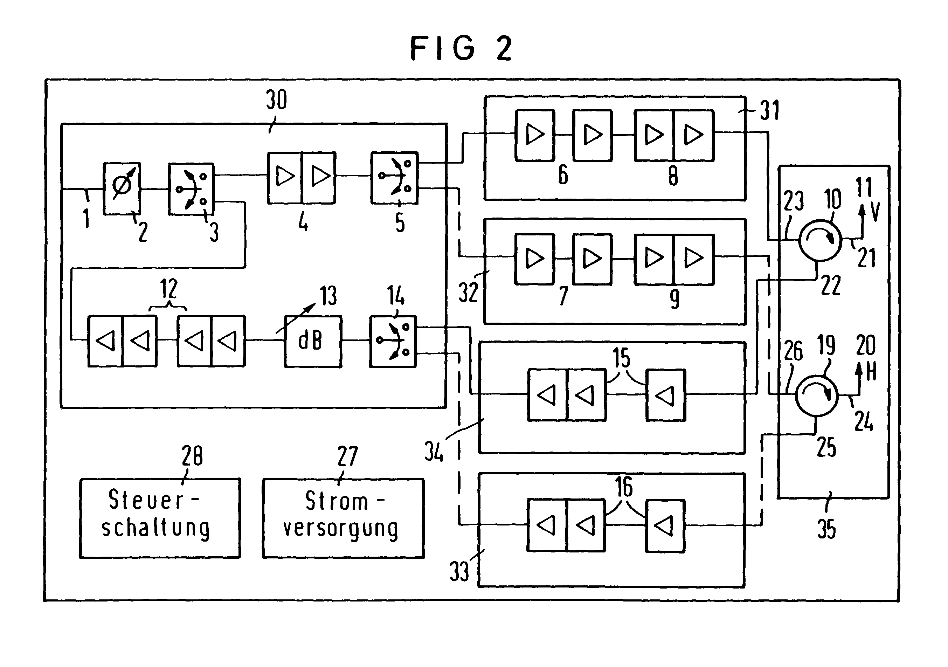

Fig. 2 zeigt schematisch in Blockschaltbildform die Hf-Untereinheiten 30 bis 35 eines Sende/Empfangs-Moduls nach der Erfindung. Untereinheiten sind eine Niederleistungs-Hf-Schaltung 30, Hochleistungsverstärkerstufen 31 und 32, rauscharme Verstärkerschaltungen 33 und 34, eine Zirkulatorschaltung 35, eine Stromversorgungsschaltung 27 und eine Steuerschaltung 28. Die logische Anordnung dieser Untereinheiten 30 bis 35 in einem Gehäuse eines Sende/Empfangs-Moduls ist in Fig.2 dargestellt. Die einzelnen Schaltungsblocks in den Untereinheiten 30 bis 35 entsprechen hinsichtlich ihrer Bezugszeichen denjenigen in Fig.1

Während der Sendeperiode läuft das Signal in der Niederleistungs-Hf-Schaltung 30 vom Anschluß 1 durch den Phasenschieber 2 zum Sende-Empfangsschalter 3, der mit dem rauscharmen MMIC-Kleinsignal-Verstärker 4 verbunden ist. Im Sendeweg der Untereinheit 30 befindet sich dann noch der Polarisationsumschalter 5. Die Leistungsverstärker-Untereinheiten 31 und 32 enthalten jeweils den linearen Treiberverstärker 6 bzw. 7 und den Hochleistungsverstärker 31 bzw. 32. Der Ausgang des Hochleistungsverstärkers 8 der Untereinheit 31 ist mit einem Eingang 23 eines Zirkulators 10 verbunden, dessen Ausgangssignal vom Anschluß 21 dem Anschluß 11 für das vertikal polarisierte Strahlerelement zugeführt wird. Der Zirkulator 10 ist Bestandteil der Zirkulatorschaltung 35, zu der ein zweiter Zirkulator 19 gehört, dessen Anschluß 26 das Sendeausgangssignal des Hochleistungsverstärkers 9 in der Untereinheit 32 aufnimmt. Am Anschluß 24 des Zirkulators 19 wird das Sendesignal zur Zuführung an den Anschluß 20 für das horizontal polarisierte Strahlerelement abgeleitet. Die beiden Zirkulatoren 10 und 19 trennen die Sende- und Empfangssignale jeweils für die vertikale und horizontale Polarisation. Das Empfangssignal des vertikal polarisierten Strahlerelements kommt über den Anschluß 11 zum Anschluß 21 des Zirkulators 10, von dessen Anschluß 22 es dann zur Untereinheit 33 mit den rauscharmen Verstärkern 16 gelangt. In ähnlicher Weise wird das empfangene Signal des horizontal polarisierten Strahlerelements vom Anschluß 20 über den Anschluß 24 des Zirkulators 19 an dessen Anschluß 25 geführt, von dem es dann an die Untereinheit 34 mit den rauscharmen Verstärkern 15 gelangt. Die verstärkten Ausgangssignale der Untereinheiten 33 und 34 werden den beiden Umschaltkontakten des Polarisationsumschalters 14 in der Untereinheit 30 zugeführt. Das dem Polarisationsumschalter 14 folgende Dämpfungsglied 13 dient der Verstärkungssteuerung des individuellen Sende/Empfangs-moduls, wodurch eine Amplitudenwichtung der Antennenapertur während der Empfangsperiode ermöglicht wird. Der erforderliche Gewinn des Empfangsweges wird durch zwei weitere, in Kette geschaltete, rauscharme MMIC-Verstärker 12 erreicht. Der Sende-Empfangsschalter 3 verbindet dann den Empfangsweg über den Phasenschieber 2 mit dem Anschluß 1.

Die Hf-Untereinheiten 30 bis 35 basieren auf einer monolithisch integrierten Galiumarsenid-Mikrowellen-Schaltkreistechnik. Die Steuerschaltung 28 läßt sich in CMOS-Technologie realisieren.

Wesentlich ist, daß der Polarisationsumschalter 5 für den Sendeweg in der Untereinheit 30 angeordnet ist und dort zwischen dem rauscharmen Verstärker 4 und den Anschlüssen für die Hochleistungsverstärker-Untereinheiten 31 und 32 liegt. Wesentlich ist auch, daß im Empfangsweg ein zweiter Polarisationsumschalter 14 vorgesehen ist, der ebenfalls in der Untereinheit 30 für Niederleistung liegt und die Signale von den Untereinheiten 33 bzw. 34 mit den rauscharmen Verstärkern 15 bzw. 16 erhält. Der Sende- und Empfangsweg jedes Polarisationskanals wird durch einen der beiden ausgangsseitigen Zirkulatoren 10 und 19 getrennt. Für die beiden Polarisationsumschalter 5 und 14, die im Niederleistungsbereich arbeiten, läßt sich der gleiche Schaltertyp verwenden wie für den Sende-Empfangsschalter 3. Die Versorgungsleistung der Leistungsverstärker 8 und 9 in den Untereinheiten 31 bzw. 32 muß nicht gesteigert werden, da lediglich einer der beiden Polarisationskanäle während einer Sendeperiode aktiv ist. Das gleiche Verhalten erhält man im Empfangsweg, indem lediglich eine der Untereinheiten 33 oder 34 während einer Empfangsperiode aktiviert ist. In der Stromversorgungsschaltung 27 sind dann Schalter oder Leistungsgatter vorgesehen, die dafür sorgen, daß lediglich diejenige Leistungsverstärker-Untereinheit 31 bzw. 32 versorgt wird, welche aktiv ist.

## Patentansprüche

1. Für ein in vertikaler und ein in horizontaler Polarisation arbeitendes Strahlerelement einer elektronisch phasengesteuerten Antenne vorgesehener, aktiver Sende/Empfangs-Modul in integrierter Mikrowellenschaltungsausführung (MlC), zwischen dessen beiden Strahlerelementanschlüssen einerseits und einem Antennensystem-Speiseanschluß andererseits im Empfangsweg ein Zirkulator, ein rauscharmer Verstärker, ein Sende-Empfangsschalter und ein elektronisch einstellbarer Phasenschieber und im Sendeweg zwischen dem Antennensystem-Speiseanschluß und den Strahlerelementanschlüssen der Phasenschieber, der Sende-Empfangsschalter, ein Hochleistungsverstärker und der Zirkulator liegen,
**dadurch gekennzeichnet,** daß an beiden Strahlerelementanschlüssen (11,20) jeweils ein Zirkulator (10,19) mit einem Anschluß (21,24) angeschlossen ist, daß sich entsprechende, der Abzweigung des Empfangssignals dienende Anschlüsse (22,25) dieser beiden Zirkulatoren in zwei Polarisations-Empfangskanälen über jeweils einen rauscharmen Verstärker (15,16) mit jeweils einem Umschaltkontakt eines Polarisationsumschalters (14) verbunden sind, dessen Umschaltarm mit dem Empfangskontakt des Sende-Empfangsschalters (3) verbunden ist, und daß der Sendekontakt des Sende-Empfangsschalters (3) mit dem Umschaltarm eines zweiten Polarisationsumschalters (5) verbunden ist, dessen beide Umschaltkontakte in zwei Polarisationssendekanälen jeweils über einen Hochleistungsverstärker (8,9) mit sich entsprechenden, der Abzweigung des Sendesignals dienenden Eingängen (23,26) der beiden Zirkulatoren (10,19) verbunden sind.

2. Modul nach Anspruch 1,
**dadurch gekennzeichnet,** daß jeweils zwischen den der Abzweigung des Empfangssignals dienenden Eingängen (22,25) der beiden Zirkulatoren (10,19) und den rauscharmen Verstärkern (15,16) in den beiden Polarisationsempfangskanälen ein Begrenzer (17,18) zwischengeschaltet ist.

3. Modul nach einem der vorhergehenden Ansprüche,
**dadurch gekennzeichnet,** daß im Empfangsweg zwischen dem Umschaltarm des ersten Polarisationsumschalters (14) und dem Empfangskontakt des Sende-Empfangsschalters (3) ein einstellbares passives Dämpfungsglied (13) oder ein Verstärker mit einstellbarer Verstärkung (VGA = variable gain amplifier) angeordnet ist.

4. Modul nach Anspruch 3,
**dadurch gekennzeichnet,** daß im Empfangsweg zwischen dem Dämpfungsglied (13) und dem Empfangskontakt des Sende-Empfangsschalters (3) noch ein rauscharmer Verstärker (12) angeordnet ist.

5. Modul nach einem der vorhergehenden Ansprüche,
**dadurch gekennzeichnet,** daß zwischen dem Sendekontakt des Sende-Empfangsschalters (3) und dem Umschaltarm des zweiten Polarisationsumschalters (5) im Sendekanal ein rauscharmer Verstärker (4) eingeschaltet ist.

6. Modul nach einem der vorhergehenden Ansprüche,
**dadurch gekennzeichnet,** daß zwischen den Umschaltkontakten des zweiten Polarisationsumschalters (5) und den Hochleistungsverstärkern (8,9) in den beiden Polarisationssendekanälen jeweils ein linearer Treiberverstärker (6,7) angeordnet ist.

7. Modul nach einem der vorhergehenden Ansprüche,
**gekennzeichnet,** durch eine Realisierung in integrierter Mikrowellenschaltungsausführung (MMIC), wobei die Gesamtfunktion oder Teilfunktionen dieser Schaltung als Galliumarsenid-monolithisch integrierte Mikrowellen-Schaltkreise (GaAs MMICs) ausgeführt sind.

8. Modul nach einem der vorhergehenden Ansprüche,
**gekennzeichnet,** durch eine Anbringung einer Stromversorgungsschaltung und einer Steuerschaltung.

## Claims

1. Active transmit/receive module, of an integrated microwave circuit design (MIC), provided for one radiator element which operates with vertical polarization, and one radiator element which operates with horizontal polarization, of an electronically phase-controlled antenna, between the two radiator element terminals of which transmit/receive module on the one hand and an antenna system feed terminal on the other, there are, in the receive path, a circulator, a low-noise amplifier, a transmit/receive switch and an electronically adjustable phase shifter and in the transmit path between the antenna system feed terminal and the radiator element terminals there are the phase shifter, the transmit/receive switch, a high-power amplifier and the circulator, characterized in that one circulator (10, 19) is connected to one terminal (21, 24) at each of the two radiator element terminals (11, 20), in that corresponding terminals (22, 25), serving to branch off the receive signal, of these two circulators are connected in two polarization receive channels to in each case one change-over contact of a polarization change-over switch (14) via in each case one low-noise amplifier (15, 16), the switch-over arm of which polarization change-over switch (14) is connected to the receive contact of the transmit/receive switch (3), and in that the transmit contact of the transmit/receive switch (3) is connected to the switch-over arm of a second polarization change-over switch (5), the two change-over contacts of which polarization change-over switch (5) are connected in two polarization transmit channels to corresponding inputs (23, 26), serving for branching off the transmit signal, of the two circulators (10, 19), in each case via one high-power amplifier (8, 9).

2. Module according to Claim 1, characterized in that a limiter (17, 18) is connected into the two polarization receive channels, in each case between the inputs (22, 25), serving for branching off the receive signal, of the two circulators (10, 19) and the low-noise amplifiers (15, 16).

3. Module according to one of the preceding claims, characterized in that an adjustable, passive damping element (13) or an amplifer with adjustable gain (VGA = variable gain amplifier) is arranged in the receive path between the switch-over arm of the first polarization change-over switch (14) and the receive contact of the transmit/receive switch (3).

4. Module according to Claim 3, characterized in that another low-noise amplifier (12) is arranged in the receive path between the damping element (13) and the receive contact of the transmit/receive switch (3).

5. Module according to one of the preceding claims, characterized in that a low-noise amplifier (4) is connected into the transmit channel between the transmit contact of the transmit/receive switch (3) and the switch-over arm of the second polarization change-over switch (5).

6. Module according to one of the preceding claims, characterized in that a linear driver amplifier (6, 7) is arranged between each of the switch-over contacts of the second polarization change-over switch (5) and each of the high-power amplifiers (8, 9) in the two polarization transmit channels.

7. Module according to one of the preceding claims, characterized by an implementation as an integrated microwave circuit design (MMIC), the overall function or function elements of this circuit being realized as gallium arsenide monolithically integrated microwave circuits (GaAs MMICs).

8. Module according to one of the preceding claims, characterized by a provision of a power supply circuit and a control circuit.

## Revendications

1. Module d'émission/réception actif, qui est prévu pour un élément rayonnant travaillant avec une polarisation verticale et pour un élément rayonnant travaillant avec une polarisation horizontale, d'une antenne à pilotage électronique de phase, dans la forme de réalisation de circuit intégré à micro-ondes (MIC), et dans lequel un circulateur, un amplificateur à faible bruit, un commutateur d'émission-réception et un déphaseur réglable électroniquement sont disposés dans la voie de réception, entre les deux bornes des éléments rayonnants du module d'émission/réception d'une part et une borne d'alimentation du système d'antenne d'autre part, et le déphaseur, le commutateur d'émission-réception, un amplificateur de grande puissance et le circulateur sont situés dans la voie d'émission entre la borne d'alimentation du système d'antenne et les bornes des éléments rayonnants,
caractérisé en ce qu'un circulateur respectif (10,19) est raccordé par une borne (21,24) aux deux bornes (11,20) des éléments rayonnants, que des bornes correspondantes (22,25), qui servent à la dérivation du signal de réception, de ces deux circulateurs sont reliées, dans deux canaux de réception de polarisation, par l'intermédiaire d'un amplificateur respectif à faible bruit (15,16), respectivement à un contact de commutation d'un commutateur de polarisation (14), dont le bras de commutation est relié au contact de réception du commutateur d'émission-réception, et que le contact d'émission du commutateur d'émission-réception (3) est relié au bras de commutation d'un second commutateur de polarisation (5), dont les deux contacts de commutation sont reliés, dans deux canaux d'émission de polarisation, par l'intermédiaire d'amplificateurs respectifs de grande puissance (8,9), à des entrées (23,26), qui se correspondent et qui sont utilisées pour la dérivation du signal d'émission, des deux circulateurs (10,19).

2. Module selon la revendication 1, caractérisé en ce que des limiteurs (17,18) sont branchés respectivement entre les entrées (22,25), utilisées pour la dérivation du signal de réception, des deux circulateurs (10,19), et les amplificateurs à faible bruit (15,16) dans les deux canaux de réception de polarisation.

3. Module selon l'une des revendications 1 ou 2, caractérisé en ce qu'un circuit d'affaiblissement passif réglable (13) ou un amplificateur à amplification réglable (VGA = variable gain amplifier, c'est-à-dire amplificateur à gain variable) est disposé dans la voie de réception entre le bras de commutation du premier commutateur de polarisation (14) et les contacts de réception du commutateur d'émission-réception (3).

4. Module selon la revendication 3, caractérisé en ce qu'un amplificateur à faible bruit (12) est en outre disposé dans la voie de réception entre le circuit d'affaiblissement (13) et le contact de réception du commutateur d'émission-réception (3).

5. Module selon l'une quelconque des revendications 1 à 4, caractérisé en ce qu'un amplificateur à faible bruit (4) est branché entre le contact d'émission du commutateur d'émission-réception (3) et le bras de commutation du second commutateur de polarisation (5).

6. Module selon l'une quelconque des revendications 1 à 5, caractérisé en ce que des amplificateurs d'attaque linéaires respectifs (6,7) sont disposés entre les contacts de commutation du second commutateur de polarisation (5) et les amplificateurs de grande puissance (8,9).

7. Module selon l'une quelconque des revendications 1 à 6, caractérisé par une réalisation sous la forme d'un circuit intégré à micro-ondes (MMIC), la fonction complète ou les fonctions partielles de ce circuit étant mises en oeuvre sous la forme de circuits de commutation à micro-ondes intégrés de façon monolithique à l'arseniure de gallium (GaAs MMIC).

8. Module selon l'une quelconque des revendications 1 à 7, caractérisé par le montage d'un circuit d'alimentation en courant et d'un circuit de commande.
